(19) **Europäisches Patentamt**
**European Patent Office**
**Office européen des brevets**

(11) **EP 4 681 861 A1**

(12) **EUROPEAN PATENT APPLICATION**
published in accordance with Art. 153(4) EPC

(43) Date of publication:
**21.01.2026 Bulletin 2026/04**

(21) Application number: **24823326.4**

(22) Date of filing: **10.06.2024**

(51) International Patent Classification (IPC):
**B23K 26/14** (2014.01)

(52) Cooperative Patent Classification (CPC):
**B23K 26/14**

(86) International application number:
**PCT/JP2024/020968**

(87) International publication number:
**WO 2024/257710 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.06.2023 JP 2023096283**

(71) Applicant: **SUMITOMO Heavy Industries, Ltd.
Tokyo 141-6025 (JP)**

(72) Inventor: **MITSUI, Junichiro
Yokosuka-shi, Kanagawa 237-8555 (JP)**

(74) Representative: **Louis Pöhlau Lohrentz
Patentanwälte
Postfach 30 55
90014 Nürnberg (DE)**

(54) **HOOD FOR LASER DEVICE, LASER PROCESSING DEVICE, AND LASER PROCESSING METHOD**

(57) A hood 30 for a laser processing device 1 includes a tubular portion 31 that extends along an axial direction, a protective glass 31a that is provided at one end of the tubular portion 31 in the axial direction and that transmits a laser beam, an opening end 31b that is provided at the other end of the tubular portion 31 in the axial direction, and a nozzle 34 that is disposed in the tubular portion 31 and that supplies a gas into the tubular portion 31. The nozzle 34 is disposed at a central portion of the tubular portion 31 in the axial direction and a part of the tubular portion 31 in a circumferential direction.

**FIG. 2**

EP 4 681 861 A1

**Description**

Technical Field

The present invention relates to a hood for a laser device, a laser processing device, and a laser processing method.

Background Art

In the related art, a laser processing device that performs laser processing such as annealing by irradiating a workpiece (processing target) with a laser beam is known (for example, see PTL 1).

In this type of laser processing device, there is a case where the workpiece is exposed to a gas such as an inert gas and laser processing is performed. In such a case, for example, the workpiece is covered with a hood including, at an uppermost portion, a nozzle for supplying the gas, and an inside of the hood is purged with the gas supplied from the nozzle. The inside of the hood is irradiated with the laser beam through a protective glass of an upper surface of the hood, and the workpiece is laser-processed.

Citation List

Patent Literature

[PTL 1] Japanese Unexamined Patent Publication No. 2022-1372

Summary of Invention

Technical Problem

However, in the configuration of the related art, since the nozzle is disposed at the uppermost portion (an end portion in a laser irradiating direction) of the hood, a single gas flow in the laser irradiating direction is formed inside the hood. The gas flow may agitate particles such as fine particles generated from the workpiece through the laser processing to lift the particles and cause the particles to adhere to the protective glass on the upper surface of the hood. When the particles adhere to the protective glass, a laser beam that transmits the protective glass is attenuated.

The present invention has been devised in view of the circumstances, and an object thereof is to suppress attenuation of a laser beam.

Solution to Problem

According to an aspect of the present invention, there is provided a hood for a laser device including a tubular portion that extends along an axial direction, a transmissive portion that is provided at one end of the tubular portion in the axial direction and that transmits a laser beam, an opening end that is provided at the other end of the tubular portion in the axial direction, and a nozzle that supplies a gas into the tubular portion, in which the nozzle is disposed at a central portion of the tubular portion in the axial direction and a part of the tubular portion in a circumferential direction.

Advantageous Effects of Invention

According to the present invention, the attenuation of the laser beam can be suppressed.

Brief Description of Drawings

FIG. 1 is a schematic view of a laser processing device according to an embodiment.
FIG. 2 is a cross-sectional view of a hood according to a modification example of the embodiment.
FIG. 3A is a perspective view of a hood according to a modification example of the embodiment.
FIG. 3B is a perspective view of a hood according to a modification example of the embodiment.
FIG. 4A is a view showing a gas flow in a hood according to the embodiment.
FIG. 4B is a view showing a gas flow in a hood of the related art.
FIG. 5A is a view showing a gas flow in a hood according to the embodiment.

FIG. 5B is a view showing a gas flow in a hood according to a modification example.

FIG. 6A is a view showing a gas flow in a hood according to a modification example of the embodiment.

FIG. 6B is a view showing a gas flow in a hood according to a modification example of the embodiment.

FIG. 7A is a view showing an analysis result.

FIG. 7B is a view showing an analysis result.

FIG. 7C is a view showing an analysis result.

FIG. 8A is a view showing an analysis result.

FIG. 8B is a view showing an analysis result.

FIG. 8C is a view showing an analysis result.

FIG. 9A is a view showing an analysis result.

FIG. 9B is a view showing an analysis result.

FIG. 9C is a view showing an analysis result.

FIG. 10A is a view showing an analysis result.

FIG. 10B is a view showing an analysis result.

FIG. 10C is a view showing an analysis result.

FIG. 11A is a cross-sectional view of a hood according to a modification example of the embodiment.

FIG. 11B is a cross-sectional view of a hood according to a modification example of the embodiment.

FIG. 12 is a view of a laser processing device according to a modification example of the embodiment.

Description of Embodiments

Hereinafter, an embodiment of the present invention will be described in detail with reference to the drawings.

[Overall Configuration of Laser Processing Device]

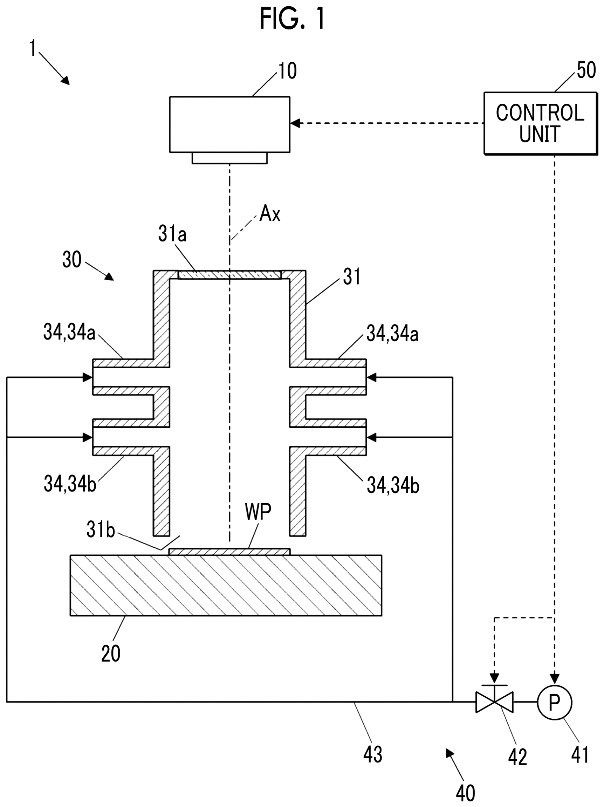

FIG. 1 is a schematic view of a laser processing device 1 according to the present embodiment.

As shown in FIG. 1, the laser processing device 1 according to the present embodiment performs processing such as annealing and welding by irradiating a workpiece WP, which is a processing target, with a laser beam. A material for the workpiece WP is not particularly limited, and is, for example, silicon or silicon carbide.

Specifically, the laser processing device 1 includes a laser irradiator 10, a support table (stage) 20, a hood 30, a gas supply unit 40, and a control unit 50.

The laser irradiator 10 includes a laser oscillator and an optical system (not shown). The laser irradiator 10 emits a predetermined laser beam in accordance with the type of processing downward.

The support table 20 is disposed below the laser irradiator 10 and supports the workpiece WP on an upper surface thereof.

At least one of the laser irradiator 10 and the support table 20 may include a movable portion such that a laser irradiation position on the workpiece WP can be adjusted.

The hood 30 is disposed below the laser irradiator 10 and above the support table 20 and covers the workpiece WP placed on the support table 20. A predetermined gas is supplied from the gas supply unit 40 into the hood 30. The hood 30 allows a laser beam from the laser irradiator 10 above to transmit therethrough while exposing the workpiece WP to a predetermined gas atmosphere.

A specific configuration of the hood 30 will be described later.

The gas supply unit 40 supplies (applies) the predetermined gas into the hood 30. The supplied gas is, for example, an inert gas, such as nitrogen, oxygen, and so on. The gas supply unit 40 includes a gas source 41 for a gas pump or a gas cylinder, a valve 42, and a pipe 43 that connects the gas source 41 and the hood 30 (each nozzle 34) to each other via the valve 42.

The control unit 50 is configured by, for example, a central processing unit (CPU) and the like and controls each unit of the laser processing device 1. Specifically, the control unit 50 controls an operation of the laser irradiator 10 to perform laser irradiation or controls an operation of the valve 42 or the gas source 41 of the gas supply unit 40 to supply the predetermined gas to the hood 30. Each unit of the gas supply unit 40 may be manually controlled.

[Specific Configuration of Hood]

As shown in FIG. 1, the hood 30 includes a tubular portion 31 and the nozzles 34.

The tubular portion 31 is formed in a cylindrical shape having a center axis Ax along an up-down direction. However, a shape of the tubular portion 31 may be any shape insofar as the shape is tubular and is not limited to the cylindrical shape.

Hereinafter, a direction along the center axis Ax may be referred to as an "axial direction", and a direction perpendicular to the axial direction may be referred to as a "radial direction". In addition, a direction in which the nozzles 34 are erected in the hood 30 (a left-right direction of the plane in FIG. 1 or the like) will be referred to as a "left-right (direction)" in some cases.

An upper end (one end) of the tubular portion 31 is closed and includes a protective glass 31a (transmissive portion) that transmits a laser beam.

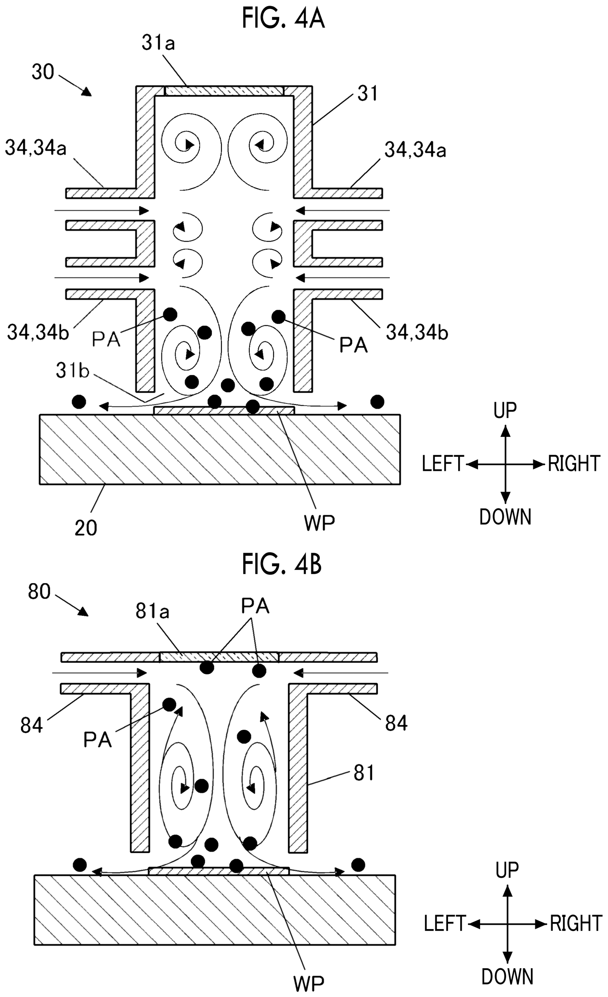

The protective glass 31a is provided over substantially the entire upper end surface of the tubular portion 31. The protective glass 31a transmits most of a laser beam emitted from the laser irradiator 10 above into the hood 30 (tubular portion 31). In addition, the protective glass 31a prevents particles PA (see FIGS. 4A, 4B, and the like) such as fine particles generated from the workpiece WP by laser processing being attached to the optical system of the laser irradiator 10.

A lower end (the other end) of the tubular portion 31 is an opening end 31b in which the entire surface is open.

The opening end 31b faces the upper surface of the support table 20 upward and downward in a state of being interposed with a predetermined gap between the opening end 31b and the upper surface of the support table 20.

The nozzles 34 are erected on an outer peripheral surface of the tubular portion 31 and blow a gas into the tubular portion 31.

A total of four nozzles 34 of the present embodiment, including two (two pairs) of two nozzles that are paired to face each other left and right in the radial direction of the tubular portion 31, are provided in parallel in the axial direction. That is, one pair of upper nozzles 34a (two nozzles) and one pair of lower nozzles 34b (two nozzles) are provided. The respective nozzles 34 are disposed in parallel in the radial direction.

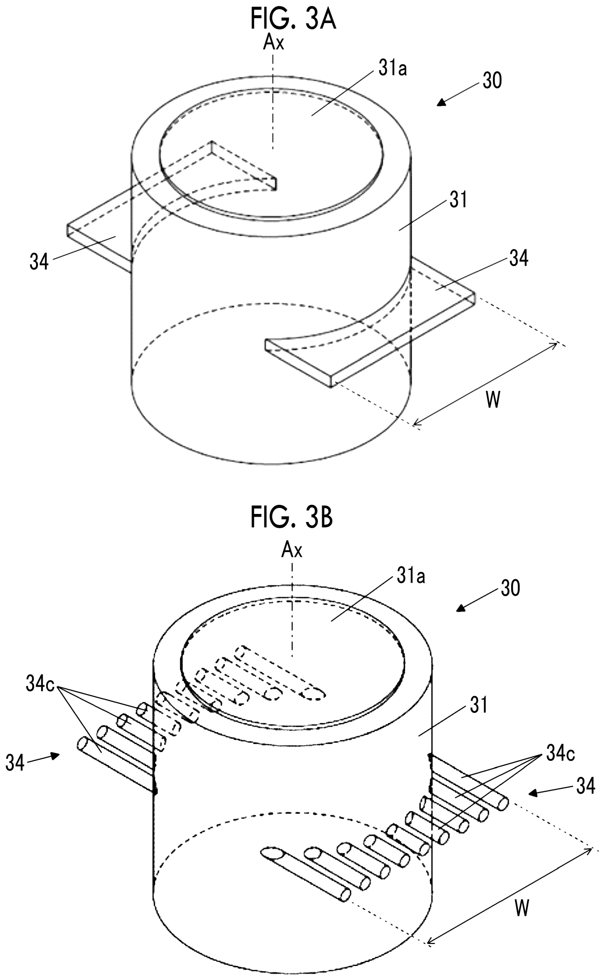

However, the number and the basic disposition of the nozzles 34 are not particularly limited insofar as the nozzles 34 include nozzles disposed in a central portion in the axial direction to be described later. For example, the nozzles 34 may be provided on only one side on which nozzles are not paired in the radial direction (that is, an odd number of nozzles), one pair or three pairs or more may be provided, or two nozzles that are positioned on an opposite side in the radial direction may not face each other (that is, positions in the axial direction may be different). The two nozzles 34 facing each other left and right may not be left-right symmetrical or axis-symmetrical to each other. In addition, as will be described later, each of the nozzles 34 may be divided into a plurality of portions in a width direction (see FIG. 3B). In addition, in a case where the two nozzles 34 face each other in the left-right direction, the two nozzles 34 may face each other in a plane perpendicular to the axial direction of the tubular portion 31, and may not extend along the radial direction.

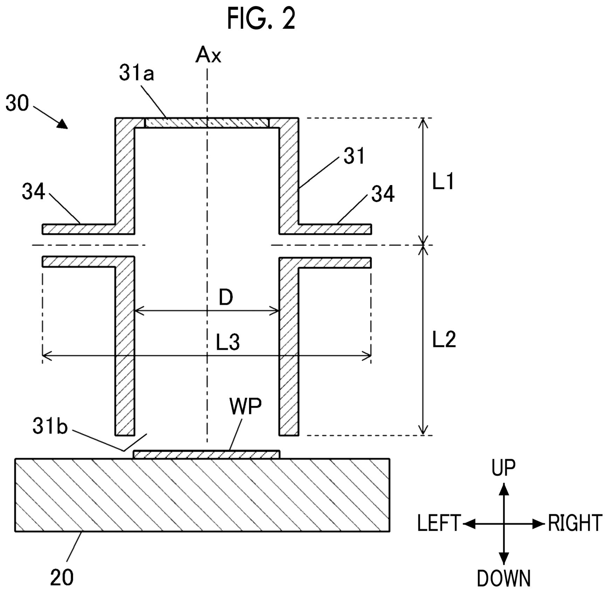

The position of each of the nozzles 34 in the axial direction is a central portion of the tubular portion 31 as shown in FIG. 2. The "central portion" in the axial direction refers to a portion of the tubular portion 31 excluding an upper end portion and a lower end portion. That is, each of the nozzles 34 may be separated from the upper end and the lower end of the tubular portion 31.

In other words, each of the nozzles 34 is disposed at a position in the axial direction defined by a first length L1 and a second length L2 below. The first length L1 is a length in the axial direction from the upper end (one end) of the tubular portion 31 to each of the nozzles 34, and the second length L2 is a length in the axial direction from the lower end (the other end) of the tubular portion 31 to each of the nozzles 34. The first length L1 and the second length L2 may not be zero.

In FIG. 2, for the sake of clarity, the hood 30 in which only one pair of nozzles 34 is provided in the axial direction is exemplified.

Herein, the "position of each of the nozzles 34 in the axial direction" refers to a center position of a portion of each of the nozzles 34, which is open to an inner diameter of the tubular portion 31. However, the first length L1 may be a distance from the upper end in the inner diameter (hole portion) of each of the nozzles 34, and the second length L2 may be a distance from the lower end in the inner diameter of each of the nozzles 34.

The first length L1 in the axial direction from the upper end of the tubular portion 31 to each of the nozzles 34 preferably satisfies the following expression (3).

$$L1 \geq 0.3D \cdots (3)$$

More preferably, the first length L1 satisfies the following expression (6).

$$L1 \geq 0.5D \cdots (6)$$

However, D is the inner diameter of the tubular portion 31. In a case where the tubular portion 31 is a rectangular tube, D may be, for example, a corresponding diameter (a diameter of the tubular portion 31 having a cylindrical shape with an equal cross-sectional area), or a minimum width or a maximum width of a cross section perpendicular to the axial direction.

Alternatively, the first length L1 is preferably 50 mm or more.

The second length L2 in the axial direction from the lower end of the tubular portion 31 to each of the nozzles 34 preferably satisfies the following expression (4).

$$L2 \geq 0.3D \cdots (4)$$

Alternatively, the second length L2 is preferably 50 mm or more.

More preferably, the second length L2 satisfies the following expression (7).

$$L2 \geq 0.5D \cdots (7)$$

As shown in FIG. 3A, a width W of each of the nozzles 34 preferably satisfies the following expression (5) with respect to the inner diameter D of the tubular portion 31.

$$W \geq 0.3D \cdots (5)$$

In FIGS. 3A and 3B, for the sake of clarity, the hood 30 in which only one pair of nozzles 34 is provided in the axial direction is exemplified.

Herein, the "width W of each of the nozzles 34" refers to a length of a portion of each of the nozzles 34, which are open to the inner diameter (hole portion) of the tubular portion 31, along the direction perpendicular to the axial direction. A center of each of the nozzles 34 in the width direction (a direction along the width W) may not match a center of the tubular portion 31 in the same direction (that is, the center axis Ax).

In addition, as shown in FIG. 3B, each of the nozzles 34 may be configured with a plurality of partial nozzles 34c arranged in parallel in the width direction. In addition, each of the nozzles 34 may include a nozzle that is not radially disposed with respect to the center axis Ax of the tubular portion 31 as viewed from the axial direction.

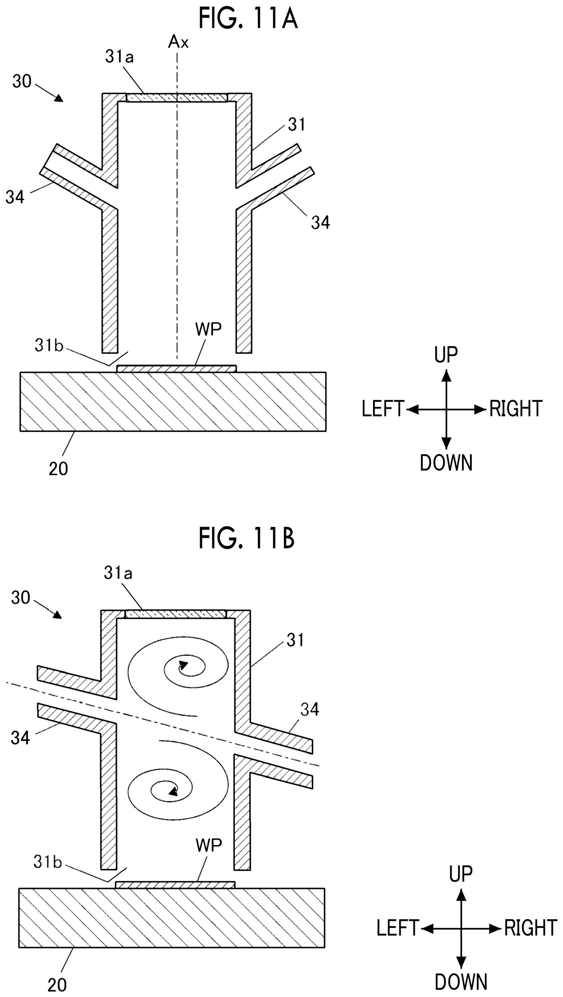

In addition, as shown in FIGS. 11A and 11B, the nozzles 34 may be inclined obliquely with respect to the axial direction. In this case, the two nozzles 34 left and right that are paired may face in oblique directions different from each other (for example, obliquely upward and obliquely downward).

In addition, the length (thickness) of the inner diameter (hole portion) of each of the nozzles 34 in the axial direction is not particularly limited, but is preferably sufficiently small with respect to the height of the tubular portion 31 in the axial direction.

In addition, the length (in the present embodiment, a length along the radial direction) of the inner diameter (hole portion) of each of the nozzles 34 along a gas flow perpendicular to the width direction is not particularly limited, but it is preferable that the inner diameter has a predetermined approach length such that a certain degree of uniform flow is formed in the width direction in each of the nozzles 34.

[Laser Processing Method]

As shown in FIG. 1, when the workpiece WP is laser-processed by the laser processing device 1, first, the workpiece WP is disposed on the upper surface of the support table 20 such that the portion of the workpiece WP to be processed is positioned inside the hood 30 (opening end 31b) in plan view.

Then, the gas supply unit 40 supplies a predetermined gas such as an inert gas to the hood 30 to purge the inside of the hood 30. The gas is supplied into the tubular portion 31 of the hood 30 from each of the nozzles 34 at a predetermined flow rate (for example, approximately 10 L/min) to form a gas flow in the tubular portion 31 of the hood 30.

In this case, each of the nozzles 34 of the hood 30 is disposed in the central portion of the tubular portion 31 in the axial direction. For this reason, as shown in FIG. 4A, a plurality of layers of vortex gas flows in the axial direction are formed in the tubular portion 31.

In this state, the control unit 50 drives the laser irradiator 10, and a laser beam is emitted from the laser irradiator 10 downward. The laser beam transmits the protective glass 31a of the hood 30 and is emitted into the tubular portion 31 to perform predetermined laser processing on the workpiece WP disposed in the opening end 31b.

A chamber (not shown) accommodates at least the hood 30 and the support table 20, and a gas leaked from the opening end 31b of the hood 30 is enclosed in the chamber. The gas in the chamber is exhausted to the outside from an exhaust line connected to the chamber.

In this manner, in the laser processing device 1, the workpiece WP is processed with a laser beam in a state where a plurality of layers of gas flows in the axial direction are formed in the hood 30 (tubular portion 31). Accordingly, lifting of the particles PA generated from the workpiece WP by the laser irradiation can be suppressed, and adhesion of the particles PA to the protective glass 31a can be suppressed.

That is, as shown in FIG. 4B, in a hood 80 of the related art, since a nozzle 84 is disposed at a substantially uppermost portion of a tubular portion 81, only a single gas flow is formed in the tubular portion 81 in the axial direction. For this reason, the particles PA generated from the workpiece WP are lifted by the gas flow and adhere to a protective glass 81a at an upper end of a hood 80. The particles PA adhering to the protective glass 81a attenuate the laser beam transmitted through the protective glass 81a.

In this regard, in the present embodiment, as the plurality of layers of the gas flows in the axial direction are formed in the hood 30, even when the particles PA are lifted by a gas flow on a lower side, approach of the particles PA to the protective glass 31a can be suppressed by a gas flow on an upper side. Accordingly, the adhesion of the particles PA to the protective glass 31a can be suppressed, and the attenuation of the laser beam can be suppressed.

At least two layers of gas flows in the tubular portion 31 may be formed in the axial direction. Herein, the term "single gas flow" refers to a gas flow in substantially the same direction, and the two layers of gas flows refer to gas flows different in a flow direction (including a vortex different in a rotation direction).

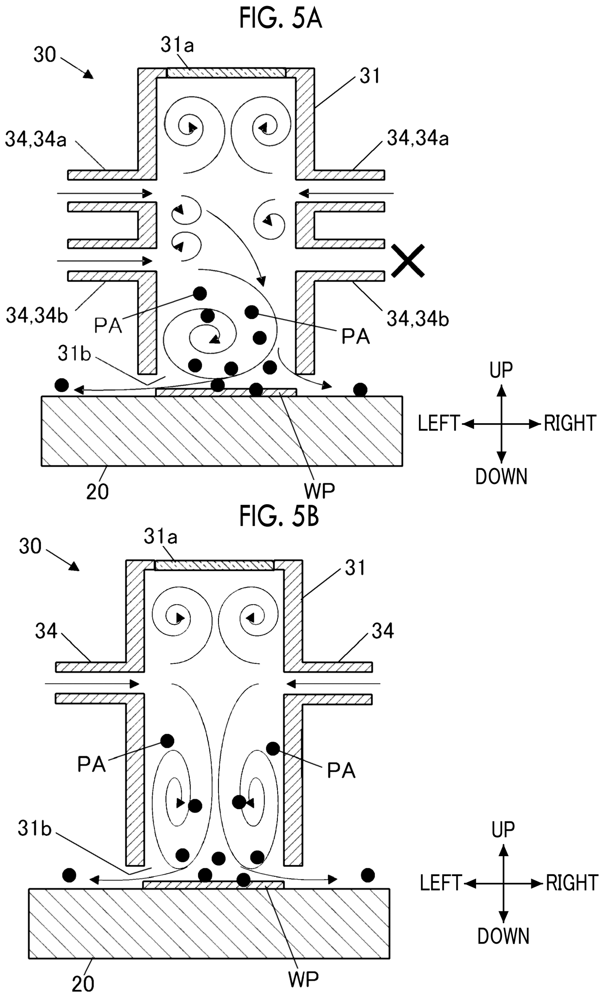

Therefore, for example, as shown in FIG. 5A, gas supply amounts may be different between the left and right nozzles 34 facing each other. Even in this case, even when a balance between the left and right gas flows is broken, at least two layers of the gas flows in the axial direction can be formed.

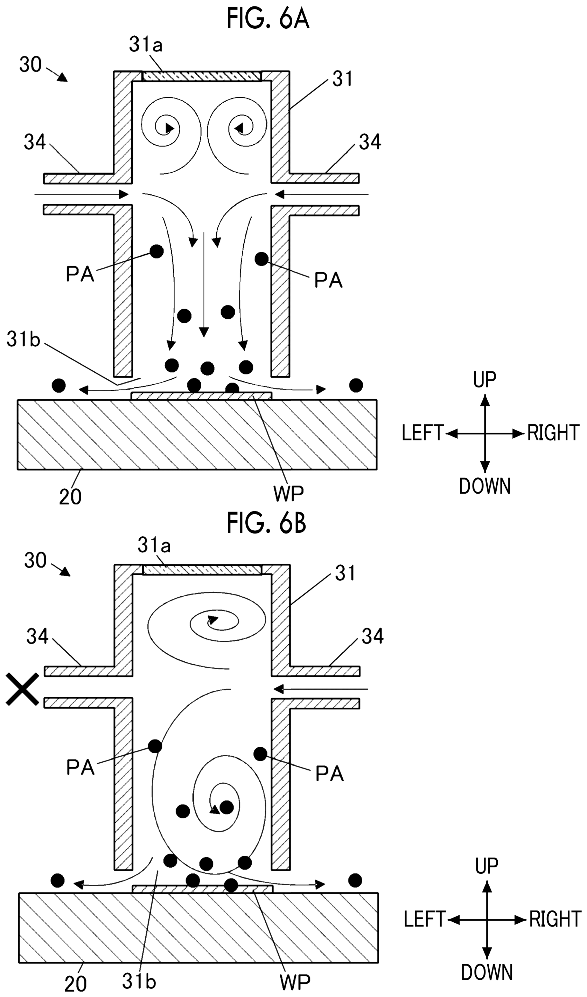

Alternatively, as shown in FIG. 5B, only one pair of nozzles 34 may be provided. In this case, as shown in FIG. 6A, the gas flow to the lower side may not be a vortex. In addition, as shown in FIG. 6B, even in a case where there is one pair of nozzles 34, the gas supply amounts may be different between the left and right nozzles 34.

[Technical Effects of Embodiment]

As described above, according to the present embodiment, the nozzles 34 of the hood 30 are disposed in the central portion of the tubular portion 31 in the axial direction. That is, the nozzles 34 are disposed at positions in the axial direction separated from the upper end and the lower end of the tubular portion 31.

For this reason, at least two layers of gas flows in the axial direction are formed in the tubular portion 31 by a gas supplied from the nozzles 34. Accordingly, the adhesion of the particles PA to the protective glass 31a can be suppressed, and the attenuation of the laser beam can be suppressed.

In addition, the nozzles 34 are disposed at a part of the tubular portion 31 in a circumferential direction. That is, the nozzles 34 are not formed over the entire periphery of the tubular portion 31. For this reason, the gas is likely to escape up and down in an inner portion of a peripheral surface of the tubular portion 31 in which the nozzles 34 are not formed. Accordingly, a vertical vortex turning in the up-down direction can be suitably formed.

In addition, according to the present embodiment, as the first length L1 in the axial direction from the upper end of the tubular portion 31 to each of the nozzles 34 satisfies the expression (3) described above, a gas flow on the upper side of each of the nozzles 34 can be more reliably formed. Therefore, adhesion of the particles PA to the protective glass 31a can be more reliably suppressed.

In addition, according to the present embodiment, as the second length L2 in the axial direction from the lower end of the tubular portion 31 to each of the nozzles 34 satisfies the expression (4) described above, a gas flow on the lower side of each of the nozzles 34 can be more reliably formed. Therefore, adhesion of the particles PA to the protective glass 31a can be more reliably suppressed.

In addition, according to the present embodiment, since the width W of each of the nozzles along the direction perpendicular to the axial direction satisfies the expression (5) described above, at least two layers of gas flows in the axial direction can be suitably formed in the width direction in the tubular portion 31. Therefore, adhesion of the particles PA to the protective glass 31a can be more reliably suppressed.

In addition, according to the present embodiment, each of the nozzles 34 includes a pair facing each other in a plane perpendicular to the axial direction. Accordingly, gas flows can collide with each other in the plane perpendicular to the axial direction, and vertical vortices that turn in the up-down direction can be suitably formed.

In addition, according to the present embodiment, each of the nozzles 34 may not be disposed radially with respect to the center axis Ax of the tubular portion 31 as viewed from the axial direction. Even when the nozzles 34 are not radially disposed, a vertical vortex that turns in the up-down direction can be formed.

[Analysis Example 1]

Subsequently, analysis examples will be described with regard to an effect of preventing adhesion of the particles PA caused by formation of a gas flow in the hood 30.

In the present analysis example 1, the gas flow in the tubular portion 31 when the shape of the hood 30 and conditions of a gas flow rate are changed is acquired by fluid analysis.

Specifically, with the shape of the hood 30 of the embodiment used as a base, and analysis is performed on a hood without a lower nozzle pair (model 1), a hood in which a left-right gas amount balance is made uniform (model 2), and a hood in which a left-right gas amount balance is biased (model 3). In addition, a gas flow in the hood 80 (see FIG. 4B) in the related art is also analyzed as a comparative example.

Dimensions of each unit of an analysis model are as follows.

· Shape of hood

Total height: 258 mm
Inner diameter D: 160 mm
First length L1: 103 mm
An axial distance between the upper and lower nozzles: 54 mm
An axial height of a blow-in port of each nozzle: 2 mm
The width W of each nozzle: 136 mm
A left-right distance L3 between end portions of the left and right two nozzles (see FIG. 2): 300 mm

· An axial gap between the hood and the support table: 5 mm
· An axial range under atmospheric pressure conditions: From the upper surface of the support table to a height of 100 mm
· A radial range under atmospheric pressure conditions: Within a diameter of φ400 mm

However, the first length L1 and the axial distance between the upper and lower nozzles are set to be the length up to the blow-in port (hole portion) of each nozzle.
Conditions of the gas flow rates of models 1 to 3 are shown in the upper row field of Table 1 below. In the field, the gas flow rates on the left and right are represented as "(flow rate on left side) and (flow rate on right side)".

[Table 1]

|  |  | without pair of lower nozzles (model 1) | Left-right symmetric gas amount balance (model 2) | Change of gas amount balance (model 3) |
|---|---|---|---|---|
| Condition of gas flow rate | Gas flow rate of pair of upper nozzles [L/min] | 10, 10 | 10, 10 | 10, 10 |
|  | Gas flow rate of pair of lower nozzles [L/min] | - | 10, 10 | 10, 2 |
| Analysis result | Prevention of particles adhesion | Possible | Good | Good |
|  | Discharge of particles | Impossible | Possible | Possible |
|  | Gas purge effect | Possible | Possible | Possible |

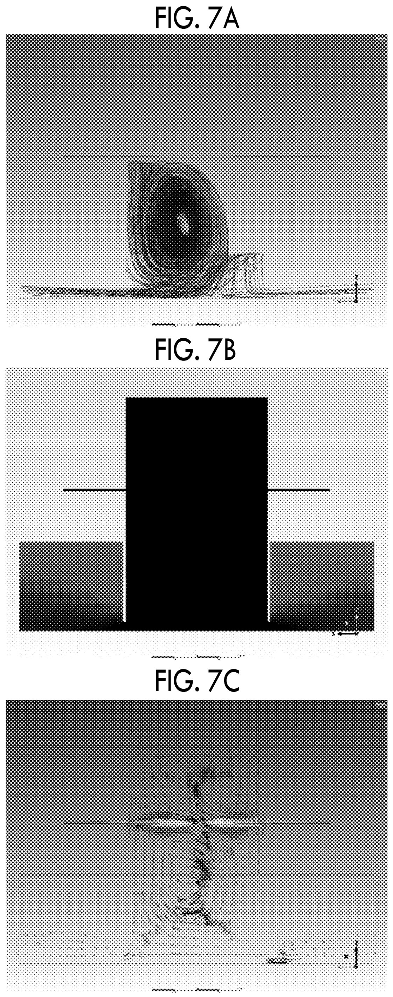

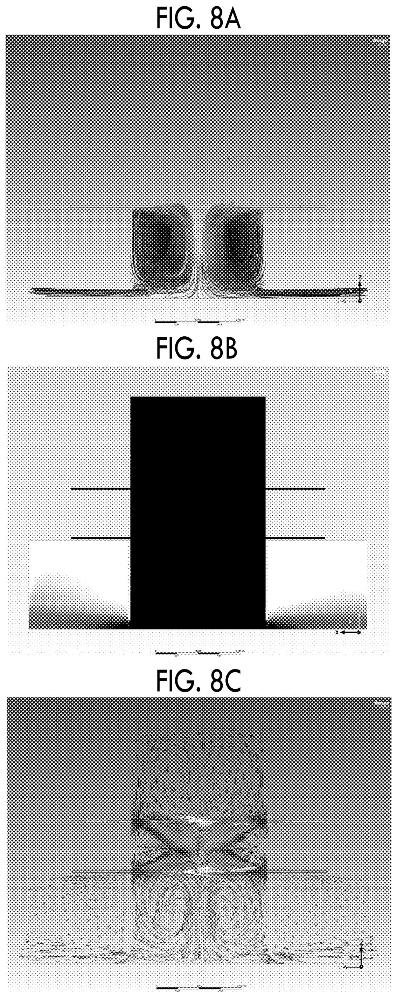

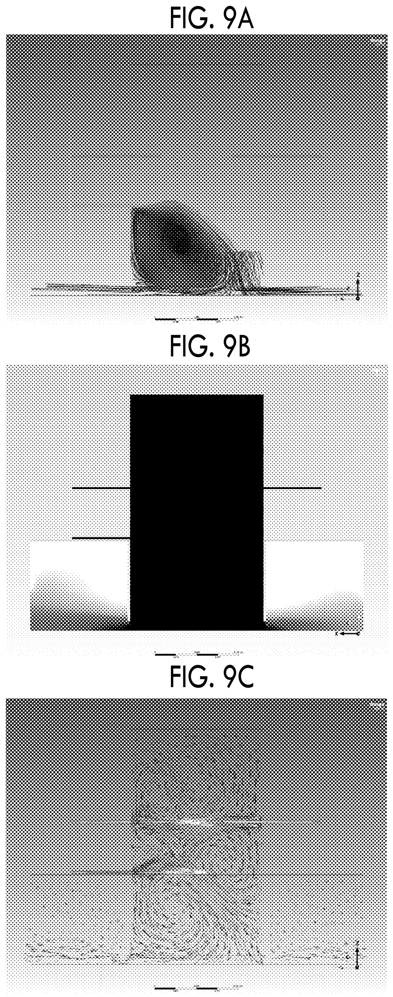

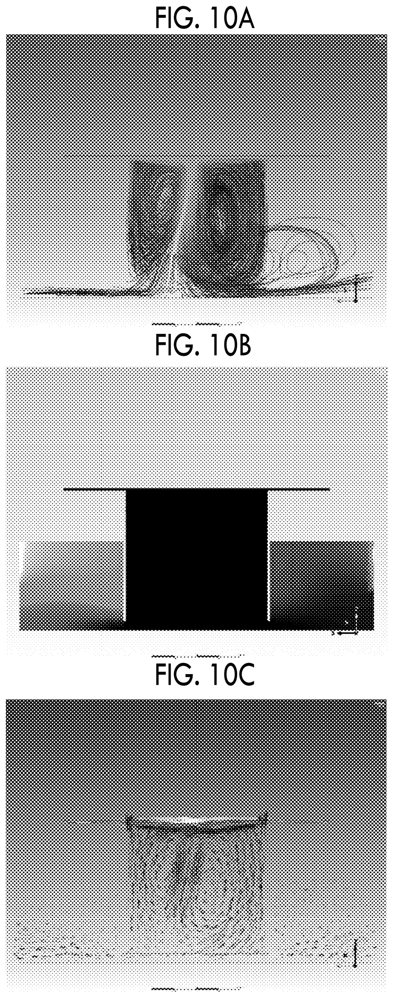

FIGS. 7A to 10C show contour views of analysis results. FIGS. 7A to 7C show analysis results of model 1, FIGS. 8A to 8C show analysis results of model 2, FIGS. 9A to 9C show analysis results of model 3, and FIG. 10A to FIG. 10C show analysis results of the hood 80 of the related art. In each of the drawings, FIGS. 7A, 8A, 9A, and 10A are path lines from a hood lower position (for example, a position at a height of 50 mm), FIGS. 7B, 8B, 9B, and 10B are gas (for example, nitrogen) concentration distributions, and FIGS. 7C, 8C, 9C, and 10C are velocity vector views. In any one of FIGS. 7A to 10C, the up and down and left and right of the plane correspond to the up and down and left and right of the hood.
From FIGS. 7A to 7C, the following can be said about model 1 (the hood 30 without a pair of lower nozzles).

· A gas flow is vortexed on the lower side of each of the nozzles 34, and the particles PA on a lower portion of the hood 30 are unlikely to reach the protective glass 31a.
· A gas concentration in the hood 30 is generally high.
· Two layers of vortex gas flows are formed up and down on the upper side and the lower side of each of the nozzles 34.

From FIGS. 8A to 8C, the following can be said about model 2 (a left-right gas amount balance is uniform).

· A gas flow is vortexed on the lower side of the lower nozzle 34b, and the particles PA on the lower portion of the hood 30 are unlikely to reach the protective glass 31a and the upper nozzle 34a.
· A gas concentration in the hood 30 is generally high.
· Three layers of vortex gas flows are formed up and down on the upper side of the upper nozzle 34a, on the lower side of the lower nozzle 34b, and between the two pairs of nozzles 34 up and down.

From FIGS. 9A to 9C, the following can be said about model 3 (a left-right gas amount balance is ununiform).

· A gas flow is vortexed on the lower side of the lower nozzle 34b, and the particles PA on the lower portion of the hood 30 are unlikely to reach the protective glass 31a and the upper nozzle 34a.
· A gas in the hood 30 is going out from a side where blow-in of the lower nozzle 34b is strong.
· Three layers of vortex gas flows are formed up and down.

From FIGS. 10A to 10C, the following can be said about the hood 80 of the related art.

· A gas flow is a vortex with one layer up and down, and there is a possibility in which the particles PA on the lower portion of the hood 30 are lifted to the protective glass 31a.
· A gas concentration in the hood 30 is generally high.

Comparisons of the above results in models 1 to 3 are shown in the lower row field of Table 1 (excluding the hood of the related art). The comparison results are listed below.

· An effect of preventing adhesion of the particles PA to the protective glass 31a can be expected in any of models 1 to 3.
· Models 2 and 3 in which three layers of gas flows are formed up and down are expected to have a higher effect of preventing adhesion of the particles PA than model 1 in which two layers of gas flows are formed up and down.
· In model 1, unlike models 2 and 3, there is a possibility in which the particles PA are not suitably discharged.
· Gas purge in the hood 30 is suitably performed in any of models 1 to 3.

[Analysis Example 2]

In the analysis example 2, an effect of preventing adhesion of the particles PA in a case where gas application at each of the nozzles 34 is changed for the hood 30 of the embodiment is evaluated through fluid analysis.
The gas application is a relative flow rate of a gas with respect to the size of the hood 30 (a capacity of the tubular portion 31) and is evaluated in three stages of "strong, weak, and none". The effect of preventing adhesion of the particles PA is evaluated in the same manner as in the analysis example 1.
Combinations of main gas applications with which an effect of preventing adhesion of the particles PA can be expected are shown in Table 2 below.
As shown in Table 2, it is preferable that at least one of the upper nozzles 34a has a "strong" gas application.
In the combinations of Table 2, No. 1 and No. 2 are the most desirable results. In addition, it is considered that the same effect is obtained even in a case where a difference in the gas application between the left and right sides in each pair of nozzles is reversed. In addition, in a case where three or more pairs of nozzles are provided, the third and subsequent patterns are considered to affect the magnitude of an effect of preventing adhesion of the particles PA, but do not affect the presence or absence of the effect.

[Table 2]

| No. | Gas application of pair of upper nozzles | | Gas application of pair of lower nozzles | | Effect of preventing adhesion of particles |
| --- | --- | --- | --- | --- | --- |
| | Left | Right | Left | Right | |
| 1 | Strong | Strong | Strong | Strong | Effective |
| 2 | Strong | Strong | Weak | Weak | Effective |
| 3 | Strong | Strong | None | None | Effective |
| 4 | Strong | Strong | Strong | Weak | Effective |
| 5 | Strong | Strong | Strong | None | Effective |
| 6 | Strong | Strong | Weak | None | Effective |
| 7 | Strong | Weak | Strong | Strong | Effective |
| 8 | Strong | Weak | Weak | Weak | Effective |
| 9 | Strong | Weak | None | None | Effective |
| 10 | Strong | Weak | Strong | Weak | Effective |
| 11 | Strong | Weak | Strong | None | Effective |

(continued)

| No. | Gas application of pair of upper nozzles | | Gas application of pair of lower nozzles | | Effect of preventing adhesion of particles |
| --- | --- | --- | --- | --- | --- |
| | Left | Right | Left | Right | |
| 12 | Strong | Weak | Weak | None | Effective |
| 13 | Strong | None | Strong | Strong | Effective |
| 14 | Strong | None | Weak | Weak | Effective |
| 15 | Strong | None | None | None | Effective |
| 16 | Strong | None | Strong | Weak | Effective |
| 17 | Strong | None | Strong | None | Effective |
| 18 | Strong | None | Weak | None | Effective |

[Others]

Although the embodiment of the present invention has been described hereinbefore, the present invention is not limited to the embodiment.

For example, although a laser beam is emitted along the axial direction of the hood 30 in the embodiment, the laser beam may be inclined with respect to the axial direction.

In addition, the configuration of the laser processing device is not limited to the configuration shown in FIG. 1.

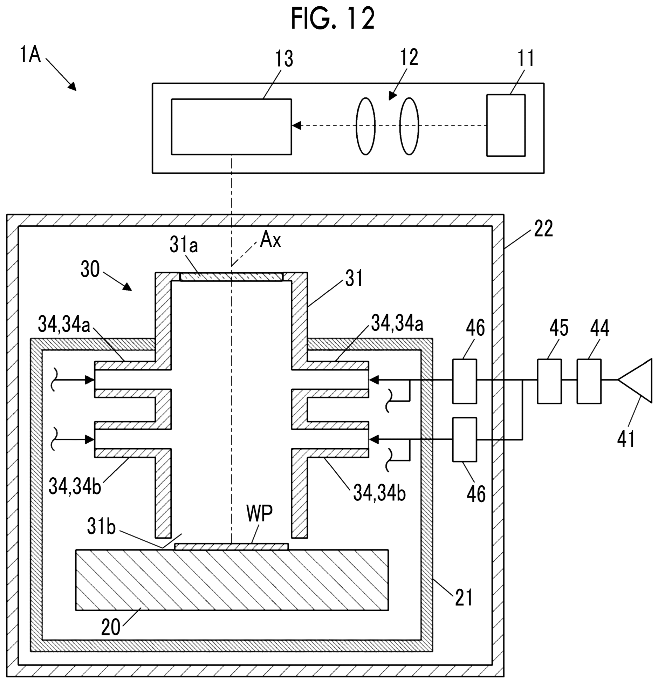

For example, in a laser processing device 1A shown in FIG. 12, a regulator 44, an on-off valve 45, and a flow rate adjusting valve 46 are provided as devices that adjust blow-in conditions of a blow-in gas from the nozzles 34. The regulator 44 adjusts a blow-in pressure from the gas source 41 such as a cylinder. The on-off valve 45 switches between ON/OFF of the blowing. The flow rate adjusting valve 46 is disposed in each of upper and lower stages and individually adjusts the flow rate of the blow-in gas in the upper and lower stages.

In the laser processing device 1A, a laser beam emitted from a laser oscillator 11 is adjusted in shape and output through an optical system 12, and then an irradiation position of the laser beam is controlled by a galvano scanner 13.

The hood 30 is fixed to a chamber 21 disposed in an enclosure 22. The support table (stage) 20 on which the workpiece WP is placed is controlled in terms of position and is positioned with respect to the hood 30 during processing. In this case, an axial gap between a lower end of the hood 30 and the upper surface of the support table 20 is set to a very short distance (approximately 2 mm in an actual machine). Accordingly, the inside of the hood 30 can be suitably purged with an inert gas such as nitrogen, and the vicinity of the workpiece WP can be kept at a low oxygen concentration (for example, an order of several tens of ppm). As a result, the workpiece WP can be suitably laser-processed.

In addition, each of the configurations is controlled by the control unit 50 (see FIG. 1).

In addition, the laser processing device according to the present invention can be widely applied to a device that performs laser processing on a workpiece in a gas atmosphere regardless of the type of processing, a material for the workpiece, or the like.

In addition, details described in the embodiment can be changed as appropriate without departing from the gist of the invention.

Industrial Applicability

As described above, the present invention is useful in suppressing the attenuation of a laser beam.

Reference Signs List

1      laser processing device
10     laser irradiator (laser irradiation means)
20     support table
30     hood (hood for laser device)
31     tubular portion
31a    protective glass (transmissive portion)

| 31b | opening end |
| 34 | nozzle |
| 34a | upper nozzle |
| 34b | lower nozzle |
| 34c | partial nozzle |
| 40 | gas supply unit (gas supply means) |
| 41 | gas source |
| 42 | valve |
| 43 | pipe |
| 50 | control unit |
| 80 | hood of related art |
| 81 | tubular portion of related art |
| 81a | protective glass of related art |
| 84 | nozzle of related art |
| Ax | center axis |
| D | inner diameter |
| PA | particle |
| W | width |
| WP | workpiece |

**Claims**

1.  A hood for a laser device comprising:

    a tubular portion that extends along an axial direction;
    a transmissive portion that is provided at one end of the tubular portion in the axial direction and that transmits a laser beam;
    an opening end that is provided at the other end of the tubular portion in the axial direction; and
    a nozzle that supplies a gas into the tubular portion,
    wherein the nozzle is disposed at a central portion of the tubular portion in the axial direction and a part of the tubular portion in a circumferential direction.

2.  The hood for a laser device according to claim 1,
    wherein a first length L1 in the axial direction from the one end of the tubular portion to the nozzle satisfies the following expression (3) with an inner diameter of the tubular portion defined as D,

$$L1 \geq 0.3D \cdots (3).$$

3.  The hood for a laser device according to claim 1,
    wherein a second length L2 in the axial direction from the other end of the tubular portion to the nozzle satisfies the following expression (4) with an inner diameter of the tubular portion defined as D,

$$L2 \geq 0.3D \cdots (4).$$

4.  The hood for a laser device according to claim 1,
    wherein a width W of the nozzle along a direction perpendicular to the axial direction satisfies the following expression (5) with an inner diameter of the tubular portion defined as D,

$$W \geq 0.3D \cdots (5).$$

5.  The hood for a laser device according to claim 1,
    wherein nozzles include a pair of nozzles facing each other in a plane perpendicular to the axial direction.

6.  The hood for a laser device according to claim 5,
    wherein the nozzles include a plurality of pairs of nozzles arranged in parallel in the axial direction.

7. The hood for a laser device according to claim **1,**
wherein the nozzle is inclined with respect to the axial direction.

8. The hood for a laser device according to claim **1,**
wherein the nozzle is not disposed radially with respect to a center axis of the tubular portion as viewed from the axial direction.

9. A laser processing device comprising:

   the hood for a laser device according to any one of claims 1 to 8;
   a support table that is disposed on an opening end side of the tubular portion and that supports a workpiece;
   laser irradiation means for irradiating an inside of the tubular portion with a laser beam through the transmissive portion; and
   gas supply means for supplying a gas to the inside of the tubular portion through the nozzle.

10. A laser processing method of performing processing by irradiating a workpiece covered with a hood with a laser beam, the laser processing method comprising:

    using, as the hood, the hood including a tubular portion that extends along an axial direction, a transmissive portion that is provided at one end of the tubular portion in the axial direction and that transmits the laser beam, an opening end that is provided at the other end of the tubular portion in the axial direction, and a nozzle that is disposed at a central portion of the tubular portion in the axial direction and at a part of the tubular portion in a circumferential direction and that supplies a gas into the tubular portion; and
    performing processing on the workpiece disposed at the opening end by irradiating an inside of the tubular portion with the laser beam through the transmissive portion in a state where the gas is supplied to the inside of the tubular portion from the nozzle and at least two layers of gas flows in the axial direction are formed.

# FIG. 1

# FIG. 2

## FIG. 3A

## FIG. 3B

## FIG. 4A

## FIG. 4B

## FIG. 5A

30
31a
31
34,34a
34,34a
34,34b
PA
PA
34,34b
31b
WP
20

UP
LEFT — RIGHT
DOWN

## FIG. 5B

30
31a
31
34
34
PA
PA
31b
WP
20

UP
LEFT — RIGHT
DOWN

## FIG. 6A

## FIG. 6B

## FIG. 7A

## FIG. 7B

## FIG. 7C

## FIG. 8A

## FIG. 8B

## FIG. 8C

## FIG. 9A

## FIG. 9B

## FIG. 9C

## FIG. 10A

## FIG. 10B

## FIG. 10C

## FIG. 11A

## FIG. 11B

## FIG. 12

## INTERNATIONAL SEARCH REPORT

| International application No. |
| --- |
| **PCT/JP2024/020968** |

### A. CLASSIFICATION OF SUBJECT MATTER

**B23K 26/14**(2014.01)i
FI:   B23K26/14

According to International Patent Classification (IPC) or to both national classification and IPC

### B. FIELDS SEARCHED

Minimum documentation searched (classification system followed by classification symbols)

B23K26/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 09-029465 A (RICOH COMPANY, LTD.) 04 February 1997 (1997-02-04) paragraphs [0023]-[0035], fig. 1-2 | 1-3, 8-10 |
| A | | 4-7 |
| A | JP 50-009680 Y1 (TOKYO SHIBAURA ELECTRIC CO., LTD.) 25 March 1975 (1975-03-25) entire text, all drawings | 1-10 |
| A | JP 2007-144491 A (KYOCERA KINSEKI CORP.) 14 June 2007 (2007-06-14) entire text, all drawings | 1-10 |
| A | JP 2004-268080 A (SUMITOMO HEAVY INDUSTRIES, LTD.) 30 September 2004 (2004-09-30) entire text, all drawings | 1-10 |
| A | JP 09-164495 A (MITSUBISHI ELECTRIC CORPORATION) 24 June 1997 (1997-06-24) entire text, all drawings | 1-10 |

| ✓ Further documents are listed in the continuation of Box C. | ✓ See patent family annex. |
| --- | --- |

| * Special categories of cited documents: | |
| --- | --- |
| "A"   document defining the general state of the art which is not considered to be of particular relevance | "T"   later document published after the international filing date or priority date and not in conflict with the application but cited to understand the principle or theory underlying the invention |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
| --- | --- |
| **23 July 2024** | **06 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/020968**

C.    DOCUMENTS CONSIDERED TO BE RELEVANT

| Category* | Citation of document, with indication, where appropriate, of the relevant passages | Relevant to claim No. |
|---|---|---|
| A | WO 03/076117 A1 (HITACHI ZOSEN CORP.) 18 September 2003 (2003-09-18) entire text, all drawings | 1-10 |

Form PCT/ISA/210 (second sheet) (July 2022)

**INTERNATIONAL SEARCH REPORT**
Information on patent family members

| International application No. |
| --- |
| **PCT/JP2024/020968** |

| Patent document cited in search report | | | Publication date (day/month/year) | Patent family member(s) | Publication date (day/month/year) |
| --- | --- | --- | --- | --- | --- |
| JP | 09-029465 | A | 04 February 1997 | (Family: none) | |
| JP | 50-009680 | Y1 | 25 March 1975 | (Family: none) | |
| JP | 2007-144491 | A | 14 June 2007 | (Family: none) | |
| JP | 2004-268080 | A | 30 September 2004 | (Family: none) | |
| JP | 09-164495 | A | 24 June 1997 | (Family: none) | |
| WO | 03/076117 | A1 | 18 September 2003 | US 2005/0206894 A1 entire text, all drawings KR 10-0985744 B1 | |

Form PCT/ISA/210 (patent family annex) (July 2022)

**REFERENCES CITED IN THE DESCRIPTION**

**Patent documents cited in the description**

- JP 2022001372 A